# EUROPEAN PATENT SPECIFICATION

(11) **EP 3 627 875 B1**
(45) Date of publication and mention of the grant of the patent: **30.03.2022**
(21) Application number: 18816915.5
(22) Date of filing: 11.06.2018
(51) Int. Cl.: H04W 16/28, H04W 72/04, H04W 24/10, H04W 72/08

(54) **COMMUNICATION METHOD AND DEVICE**
KOMMUNIKATIONSVERFAHREN UND -VORRICHTUNG
PROCÉDÉ ET DISPOSITIF DE COMMUNICATION

(30) Priority: 15.06.2017 CN 201710453448
(43) Date of publication of application: 25.03.2020
(73) Proprietor: Huawei Technologies Co., Ltd., Longgang District Shenzhen, Guangdong 518129 (CN)
(72) Inventor: GENG, Tingting, Shenzhen Guangdong 518129 (CN); XU, Min, Shenzhen Guangdong 518129 (CN); ZENG, Qinghai, Shenzhen Guangdong 518129 (CN)
(74) Representative: Goddar, Heinz J.
(86) International application number: PCT/CN2018/090651
(87) International publication number: WO 2018/228333

(56) References cited:
- WO-A1-2013/109111
- WO-A1-2015/100533
- WO-A1-2016/179804
- WO-A1-2017/080332
- CN-A- 103 037 427
- CN-A- 106 488 472
- US-A1- 2017 054 534
- US-A1- 2017 054 534

## Description

### TECHNICAL FIELD

This application relates to the field of communications technologies, and in particular, to a communication method and a communications apparatus.

### BACKGROUND

Currently, a mobile communications technology develops towards a high speed direction, a direction of a large data traffic volume, and the like, and a spectrum demand during communication transmission also increases constantly. Because conventional low-band spectrum resources are very congested, and high-band (for example, a millimeter-wave band or a centimeter-wave band) spectrums have a large quantity of available bandwidths, high-band spectrums become important resources meeting large-capacity and high-bandwidth requirements in future communication. Because a high-frequency cell using a high-band spectrum usually covers a small area, and a beam signal is easily blocked, a beamforming (BF) technology is widely used in the high-frequency cell to increase coverage.

In the beamforming technology, to align with a target terminal, a transmit beam formed by an antenna array dynamically tracks a location of the target terminal, and the transmit beam possibly may track the target terminal from a center location of a cell to an edge location of the cell, and even track the target terminal to a neighboring cell. In this way, interference is easily caused between neighboring beams, and how to implement interference coordination between high-frequency cells has become a problem urgently needing to be resolved.

US 2017/054534 A1 discloses inter-cell coordination and beam-aware scanning with end-to-end UE-BS signaling enhancements for robust HO trigger in a beamforming mmWave network. From the network and the base station perspective, inter-BS control beam coordination is performed, coupled with neighbor-cell information advertisement to facilitate UE-side beam-aware scanning. From UE perspective, by utilizing the advertised CB information, UE can learn serving cell and neighbor cell CB pattern for beam-aware scanning.

### SUMMARY

The present invention discloses communication methods, communications apparatuses, communication readable storage mediums and communication system in the independent claims, to facilitate interference coordination between high-frequency cells. Specific embodiments are defined by the dependent claims. Embodiments which do not fall within the scope of the claims are examples for understanding the present invention.

### BRIEF DESCRIPTION OF DRAWINGS

To describe the technical solutions in the embodiments of this application or in the background more clearly, the following briefly describes the accompanying drawings required for describing the embodiments of this application or the background.
FIG. 1 is a schematic flowchart of a communication method according to an embodiment of this application;
FIG 2a is a schematic diagram of beam distribution
FIG. 2b is a schematic diagram of beam interference coordination
FIG. 2c is a schematic diagram of another beam interference coordination
FIG. 2d is a schematic diagram of still another beam interference coordination
FIG. 2e is a schematic diagram of another beam distribution
FIG. 2f is a schematic diagram of still another beam distribution
FIG. 3 is a schematic structural diagram of a communications apparatus
FIG. 4 is a schematic structural diagram of another communications apparatus
FIG. 5 is a schematic structural diagram of still another communications apparatus
FIG. 6 is a schematic structural diagram of still another communications apparatus

### DESCRIPTION OF EMBODIMENTS

The following describes the embodiments of this application with reference to the accompanying drawings in the embodiments of this application.

The technical solutions of the embodiments of this application may be applied to various communications systems, for example, a long term evolution (Long Term Evolution, LTE) system, a new radio (New Radio, NR) communications system, or a communications system following NR. This is not limited in this application, and any system having a similar problem can use the technical solutions of the embodiments of this application.

A network device described in the embodiments of this application may be a base station, a central unit (Central Unit, CU), or a distributed unit (Distributed Unit, DU) in NR or a subsequent evolved system.

A terminal described in the embodiments of this application may be a mobile station (Mobile Station, MS), a mobile terminal (Mobile Terminal), a computer built-in or in-vehicle mobile apparatus, or the like.

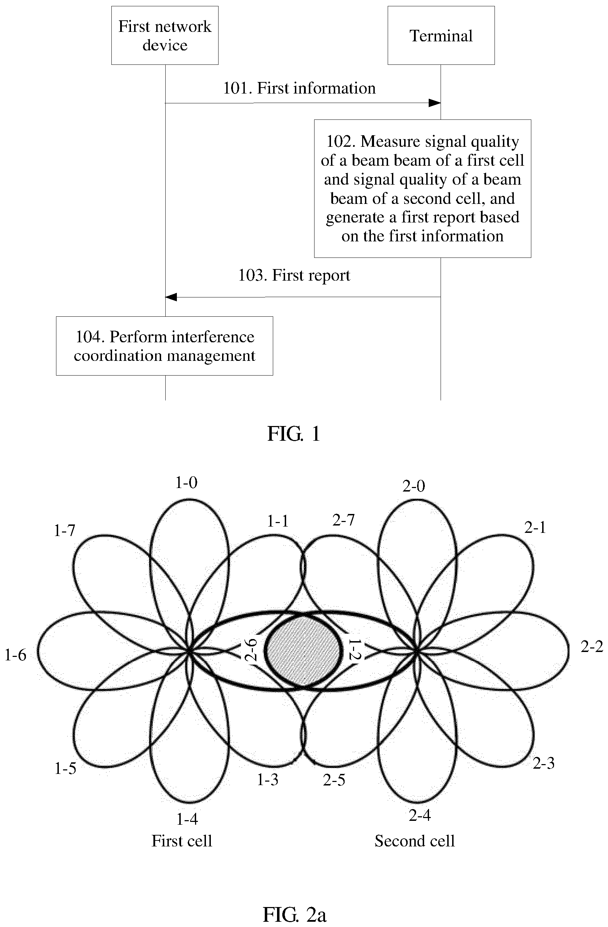

FIG. 1 is a schematic flowchart of a communication method according to an embodiment of this application. A first communications apparatus and a second communications apparatus are used in the method.

Optionally, the first communications apparatus may be a network device such as a base station, or may be a chip in a network device, and the second communications apparatus may be a terminal, or may be a chip in a terminal.

In the communication method in this embodiment of this application, the first communications apparatus may deliver first information including quality threshold information to the second communications apparatus; and the second communications apparatus measures signal quality of a beam (beam) of a neighboring cell of a serving cell and signal quality of a beam of the serving cell, and reports, to the first communications apparatus by using a first report, related information of a beam on which interference exists. The related information of the beam includes cell identifier information and beam identifier information, and further, the related information of the beam may further include signal quality and the like.

Optionally, there is an overlapping coverage area between beams interfering with each other, and the beams have relatively good signal quality, or the beams have relatively close signal quality, or one beam has relatively good signal quality, and the beams have relatively close signal quality.

Further, after receiving the first report reported by the terminal, the first communications apparatus may perform, based on the first report, interference coordination management on the beam on which interference exists, for example, adjust a signal transmit parameter of the beam on which interference exists. Alternatively, the first communications apparatus may interact with a third communications apparatus to implement interference coordination management on the beam on which interference exists. Optionally, the third communications apparatus may be a network device such as a base station, or may be a chip in a network device.

Beams may include a transmit beam and a receive beam. The transmit beam may mean signal strength distribution formed in different directions in space after a signal is transmitted by using an antenna, and the receive beam may mean signal strength distribution that is of a radio signal received by using an antenna and that is in different directions in space. It may be understood that one or more antenna ports of one beam may be considered as one antenna port set; in other words, one antenna port set includes at least one antenna port.

Specifically, a beam may be a precoding vector having particular energy transmission directivity, and the precoding vector can be identified by using identifier information. The energy transmission directivity means that a signal on which precoding processing has been performed by using the precoding vector and that is received at a particular spatial location has a relatively high received power, for example, the received power meets a receiving and demodulation signal-to-noise ratio; and a signal on which precoding processing has been performed by using the precoding vector and that is received at another spatial location has a relatively low received power, for example, the received power does not meet the receiving and demodulation signal-to-noise ratio. Different communications devices may have different precoding vectors, that is, correspond to different beams. For a configuration or a capability of a communications device, one communications device may use one or more of a plurality of different precoding vectors at a same moment, that is, one or more beams may be formed at the same time. The beam may be understood as a spatial resource. A beam may be identified by using one piece of identifier information, and the identifier information may correspond to a corresponding resource ID configured for the user, for example, may correspond to an ID or a resource of a channel state information-reference signal (CSI-RS) of a configuration, or may be an ID or a resource of an uplink sounding reference signal (Sounding Reference Signal, SRS) of a configuration, or may be identifier information explicitly or implicitly carried in a particular signal or channel carried by using the beam. A specific carrying manner includes but is not limited to: sending a synchronization signal or a broadcast channel by using the beam, to indicate the identifier information of the beam.

The following provides descriptions by using an example in which the first communications apparatus is a first network device and the second communications apparatus is a terminal, and the communication method described in this embodiment includes the following steps.

101. The first network device sends first information to the terminal.

Correspondingly, the terminal receives the first information.

It may be understood that when the first communications apparatus is a chip in a network device, the first communications apparatus sends the first information to the second communications apparatus. The first information sent by the first communications apparatus may further be processed by another module in the network device, for example, a radio frequency module performs up-conversion processing on the first information. The first information may further be processed and then forwarded to the second communications apparatus by another communications apparatus. This is not limited in this embodiment of this application. When the second communications apparatus is a chip in the terminal, the second communications apparatus receives the first information from the first communications apparatus. Before the second communications apparatus receives the first information, the first information may further be processed by another module in the terminal, for example, a radio frequency module performs down-conversion processing on the first information. This is not limited in this embodiment of this application.

In a possible implementation, network devices may negotiate with each other, to determine a target network device that is to send the first information to the terminal, and the target network device may be a network device corresponding to a serving cell of the terminal, or may be a network device corresponding to a neighboring cell of a serving cell of the terminal. This embodiment of this application uses an example in which the target network device is the first network device.

In a possible implementation, network devices may interact with each other about an interference coordination management capability, to determine whether a peer party has an interference coordination management capability, and interference coordination management may be implemented between network devices having an interference coordination management capability.

The terminal may be specifically a terminal located in an overlapping coverage area between neighboring cells. Alternatively, the network device may use, based on current locations of terminals and a historically recorded beam causing interference and/or a historically recorded beam receiving interference, a terminal that is currently located in a coverage range of the historically recorded beam causing interference and/or a coverage range of the historically recorded beam receiving interference as an object to which the first information is to be sent.

The first information may include quality threshold information, and the quality threshold information includes a signal quality threshold of the serving cell of the terminal and a signal quality threshold of the neighboring cell of the serving cell, or the quality threshold information includes a threshold of a difference between signal quality of a beam of the serving cell and signal quality of a beam of the neighboring cell. The signal quality threshold of the serving cell and the signal quality threshold of the neighboring cell of the serving cell may be the same or may be different. It may be understood that if the signal quality threshold of the serving cell and the signal quality threshold of the neighboring cell are the same, the quality threshold information may include only one signal quality threshold, to indicate that the serving cell of the terminal and the neighboring cell use the same signal quality threshold.

It may be understood that the signal quality in this embodiment of this application is a generalized concept, and may be understood as a parameter of measuring a signal receiving status, and for example, may include one of the following: a reference signal received power (RSRP) and reference signal received quality (RSRQ). This is not limited in this embodiment of this application.

Optionally, the first network device may send the first information to the terminal by using dedicated signaling or in a broadcast manner, where the dedicated signaling may be, for example, radio resource control (Radio Resource Control, RRC) connection reconfiguration signaling or other RRC signaling used for interference coordination configuration.

Optionally, to enable the terminal to determine information such as information about a to-be-measured cell and a configuration for measurement execution, to avoid an increase in power consumption caused because the terminal blindly performs large-scale measurement, the first information may further include at least one of the following: cell information, time information, time length information, measurement status indication information, and the like.

The cell information is used to indicate related information of a to-be-measured cell, and the to-be-measured cell may include the neighboring cell of the serving cell.

Optionally, the to-be-measured cell may further include the serving cell.

It may be understood that in this embodiment of this application, related information of a cell may include at least one of the following: a global cell identity (Global Cell Identity, GCI) of a cell, a physical cell identity (Physical Cell Identity, PCI), a frequency, a synchronization signal (Synchronization Signal, SS) pattern, and beam information of the cell.

The beam information of the cell may include beam identifier information and/or a beam scanning mode. The beam identifier information is used to uniquely identify the beam, and may specifically include one or more of a beam ID, an antenna port identifier of the beam, a reference signal of the beam, and an index of the beam. The beam scanning mode may include a mapping relationship between beam identifier information and a corresponding scanning time, and/or a beam scanning period.

The time information may be used to indicate a measurement start time, the time length information may be used to indicate measurement duration, and the measurement status indication information may be used to indicate a measurement start status. For example, the measurement status indication information may indicate that measurement is started only when the terminal enters one of an RRC idle (idle) mode, an RRC inactive (inactive) mode, and an RRC active (active) mode.

102. The terminal measures signal quality of a beam beam of a first cell and signal quality of a beam beam of a second cell, and generates a first report based on the first information.

It may be understood that the terminal may perform measurement in different manners based on different content of the first information.

In a possible implementation, the terminal determines to-be-measured cells, where the to-be-measured cells include the serving cell (denoted as the first cell) of the terminal and the neighboring cell (denoted as the second cell) of the serving cell. The terminal measures the signal quality of the beam of the first cell and the signal quality of the beam of the second cell to obtain signal quality of at least one beam of the first cell and signal quality of at least one beam of the second cell; determines whether the obtained signal quality of the beam of the first cell and the obtained signal quality of the beam of the second cell meet a preset condition; and when the signal quality of the beam of the first cell and the signal quality of the beam of the second cell meet the preset condition, determines that there is a beam on which interference exists between the first cell and the second cell. The preset condition may include the following: Both the signal quality of the beam of the first cell and the signal quality of the beam of the second cell are relatively good; or the signal quality of the beam of the first cell is relatively close to the signal quality of the beam of the second cell, for example, signal quality of a first beam of the first cell is greater than or equal to the signal quality threshold of the serving cell, and signal quality of a second beam of the second cell is greater than or equal to the signal quality threshold of the neighboring cell. Alternatively, the preset condition may include the following: An absolute value of a difference between signal quality of a first beam of the first cell and signal quality of a second beam of the second cell is less than or equal to the difference threshold.

For example, the terminal compares the signal quality of the at least one beam of the first cell with the signal quality threshold of the serving cell to determine a beam (denoted as the first beam) whose signal quality is greater than or equal to the signal quality threshold of the serving cell, and compares the signal quality of the at least one beam of the second cell with the signal quality threshold of the neighboring cell of the serving cell to determine a beam (denoted as the second beam) whose signal quality is greater than or equal to the signal quality threshold of the neighboring cell of the serving cell. The terminal may determine that the second beam of the second cell causes interference to a service of the terminal on the first beam of the first cell, and generates a measurement report (denoted as the first report). Alternatively, after obtaining the signal quality of the at least one beam of the first cell and the signal quality of the at least one beam of the second cell, the terminal obtains an absolute value of a difference between the signal quality of the at least one beam of the first cell and the signal quality of the at least one beam of the second cell, and compares the absolute value of the difference with the difference threshold to determine a beam (denoted as the first beam) of the first cell and a beam (denoted as the second beam) of the second cell, where an absolute value of a difference between signal quality of the beam of the first cell and signal quality of the beam of the second cell is less than or equal to the difference threshold. The terminal may determine that the second beam of the second cell causes interference to a service of the terminal on the first beam of the first cell, and generates a measurement report (denoted as the first report).

In a possible implementation, the quality threshold information included in the first information may include a first signal quality threshold and the threshold of the difference between the signal quality of the beam of the serving cell and the signal quality of the beam of the neighboring cell, and the first signal quality threshold may be the same as or different from the signal quality threshold of the serving cell and the signal quality threshold of the neighboring cell of the serving cell. In this case, the preset condition may include the following: The signal quality of the first beam of the first cell or the signal quality of the second beam of the second cell is greater than or equal to the first signal quality threshold, and the absolute value of the difference between the signal quality of the first beam of the first cell and the signal quality of the second beam of the second cell is less than or equal to the difference threshold. In other words, when signal quality of one beam is relatively good, and a different beam has relatively close signal quality, it is determined that the beams interfere with each other.

In a possible implementation, the threshold of the difference between the signal quality of the beam of the serving cell and the signal quality of the beam of the neighboring cell may be a relative value, that is, the difference threshold may be a positive value or a negative value. Then, when the difference threshold is a positive value, the preset condition may include the following: A difference obtained by subtracting a smaller value from a larger value in the signal quality of the first beam and the signal quality of the second beam is less than or equal to the difference threshold. Alternatively, when the difference threshold is a negative value, the preset condition may include the following: A difference obtained by subtracting a larger value from a smaller value in the signal quality of the first beam and the signal quality of the second beam is greater than or equal to the difference threshold.

The first report includes the cell identifier information and the beam identifier information. The beam identifier information includes identifier information of the first beam of the first cell and/or identifier information of the second beam of the second cell. The cell identifier information includes identifier information of a cell corresponding to a beam identified by the beam identifier information. When the beam identifier information includes the identifier information of the first beam of the first cell, the cell identifier information includes identifier information of the first cell; when the beam identifier information includes the identifier information of the second beam of the second cell, the cell identifier information includes identifier information of the second cell; or when the beam identifier information includes the identifier information of the first beam and the identifier information of the second beam, the cell identifier information includes identifier information of the first cell and identifier information of the second cell.

Identifier information of a cell may be a GCI, a PCI, or a PCI and a frequency.

In a possible implementation, if the first information further includes the cell information, where the cell information is used to indicate related information of a to-be-measured cell, the terminal may directly determine the to-be-measured cell based on the cell information, where the to-be-measured cell may include the neighboring cell of the serving cell. In this case, the terminal measures the signal quality of the beam of the neighboring cell of the serving cell specified by the first network device.

Optionally, the to-be-measured cell may further include the serving cell, and the terminal further measures the signal quality of the beam of the serving cell.

In another possible implementation, if the first information does not include the cell information, the terminal may measure signal quality of a beam of a cell that can be measured by the terminal, or the terminal may measure, based on a neighboring cell list sent by the first network device, signal quality of a beam of a neighboring cell that can be measured by the terminal. The neighboring cell list may be sent by the first network device before the first network device sends the first information to the terminal.

In a possible implementation, if the first information includes the time information, the terminal starts signal quality measurement at a moment corresponding to the time information.

Alternatively, if the first information includes the measurement status indication information, for example, the measurement status indication information indicates that signal quality measurement is started when the terminal enters the RRC idle mode or the RRC inactive mode, the terminal starts measurement when entering the RRC idle mode or the RRC inactive mode.

It may be understood that the first information may further include the time length information, duration of measurement performed by the terminal after the terminal starts measurement is duration corresponding to the time length information.

It may be understood that the information in the first information may be combined to control the terminal to measure signal quality of a beam.

Further, the first report may further include signal quality of the beam corresponding to the beam identifier information in the first report. For example, if the first report carries an identifier of the first beam, the first report may further include the signal quality of the first beam; or if the first report carries an identifier of the second beam, the first report may further include the signal quality of the second beam; or if the first report carries an identifier of the first beam and an identifier of the second beam, the first report may further include the signal quality of the first beam and the signal quality of the second beam. The first report carries signal quality of a beam, so that a network side can determine signal quality of a beam causing interference, to more accurately perform interference coordination.

Further, the first report may further include information about a time and/or a location of generating the first report, so that the network side can better perform beam adjustment based on the time information and/or the location information, for example, adjust a sending time of a beam, or adjust a direction of a beam. For example, the network side may determine, based on the information about the time of generating the first report, whether the first report is effective when the first report is received, and the network side may assist in, with reference to location information of the terminal when the terminal generates the first report, adjusting a signal transmit angle in a signal transmit parameter.

103. The terminal sends the first report to the first network device.

Correspondingly, the first network device receives the first report.

Optionally, the terminal may send the measurement report (namely, the first report) in a plurality of manners. For example, after the terminal in the RRC active mode measures signal quality and obtains a measurement result, the terminal may immediately send the first report including the measurement result to the first network device by using RRC signaling. The RRC active mode may alternatively be referred to as an RRC connected (connected) mode.

Alternatively, the terminal in the RRC active mode first may send, to the first network device, indication information such as report indicator information, used to indicate that there is the first report, and then send the first report to the first network device after receiving an acknowledgement notification of the first network device.

For another example, after the terminal in the RRC idle mode or the RRC inactive mode measures signal quality and obtains the first report, the terminal may immediately send, to the first network device by using a contention-based data transmission resource or a grant-free (grant-free) resource, the first report or indication information used to indicate that there is the first report.

Alternatively, the terminal in the RRC idle mode or the RRC inactive mode first may buffer the first report, and when the terminal sends an RRC message, for example, when the terminal initiates a connection establishment complete message, or the terminal sends a reestablishment complete message, or the terminal sends a reconfiguration complete message, or the terminal sends a connection resume complete message, or the terminal sends a connection re-activation complete message, the terminal may add, to the RRC message, indication information such as report indicator information, used to indicate that there is the first report. Then, the terminal may receive a first-report request message that is sent by the first network device based on the indication information, and send the first report based on the first-report request message. The terminal in the RRC idle mode or the RRC inactive mode buffers the first report, and sends the first report or the indication information of the first report only when the terminal initiates the RRC message, to avoid overheads of the RRC message caused because the terminal sends only the first report.

In this embodiment of this application, the first network device delivers the first information including the quality threshold information to the terminal, and the terminal measures the signal quality of the beam of the neighboring cell of the serving cell and the signal quality of the beam of the serving cell, and reports, to the first network device by using the first report, the related information of the beam on which interference exists, to facilitate interference coordination between high-frequency cells.

Optionally, after receiving the first report, the network side may further perform interference coordination management, that is, perform step 104.

104. The first network device performs interference coordination management.

Further, after receiving the first report, the first network device may perform interference coordination management based on the first report, and the first network device may perform interference coordination management in different manners in different scenarios.

Scenario 1: Both the first cell and the second cell belong to the first network device, and then the first network device itself may perform interference coordination management. For example, the first network device may adjust a signal transmit parameter of the first beam or the second beam, where the signal transmit parameter may specifically include one or more of a signal transmit power, a signal transmit angle, and a signal transmit time.

In a possible implementation, if the beam identifier information in the first report includes only the identifier information of the first beam, the first network device may adjust only the signal transmit parameter of the first beam based on the first report.

Alternatively, if the beam identifier information in the first report includes only the identifier information of the second beam, the first network device may adjust only the signal transmit parameter of the second beam based on the first report.

Alternatively, if the beam identifier information in the first report includes both the identifier information of the first beam and the identifier information of the second beam, the first network device may adjust the signal transmit parameter of one of the first beam and the second beam or the signal transmit parameters of both the first beam and the second beam based on the first report, to improve diversity of manners in which the first network device performs interference coordination management.

Optionally, a signal transmit power of a beam may be adjusted to implement interference coordination management. For example, the first network device may reduce a signal transmit power of the first beam and/or a signal transmit power of the second beam. For example, the first network device may determine an adjusted signal transmit power of the first beam and/or an adjusted signal transmit power of the second beam based on the existing signal transmit power of the first beam and/or the existing signal transmit power of the second beam and signal transmit power offsets, and adjust the signal transmit power of the first beam and/or the signal transmit power of the second beam to the adjusted signal transmit powers. It may be understood that the signal transmit power offsets used to adjust the signal transmit powers of the first beam and the second beam may be the same or may be different.

Alternatively, a signal transmit angle of a beam may be adjusted to implement interference coordination management. For example, the first network device may change a signal transmit angle of the first beam and/or a signal transmit angle of the second beam by a preset angle value.

Alternatively, a signal transmit time of a beam may be adjusted to implement interference coordination management, and this manner is applicable to a scenario of beam scanning. For example, the first network device may advance or delay a signal transmit time of the first beam and/or a signal transmit time of the second beam by preset duration, so that the first beam and the second beam do not cause interference coverage at a same location at the same time.

It may be understood that the foregoing several manners of implementing interference coordination management may be combined for use. For example, both a signal transmit power and a signal transmit angle of a beam may be adjusted to implement interference coordination management.

Scenario 2: The first cell and the second cell belong to different network devices. Assuming that the first cell belongs to the first network device, and the second cell belongs to a second network device, the first network device may interact with the second network device to implement interference coordination management.

In a possible implementation, the first network device may directly adjust a signal transmit parameter of the first beam of the first cell, and notify the second network device of an adjustment result (that is, an adjusted signal transmit parameter of the first beam), and then the second network device returns an acknowledgement response to the first network device. Optionally, this solution is applicable to a scenario in which the first network device is a secondary network device or an auxiliary network device, and the second network device is a primary network device or a control network device.

Alternatively, in another possible implementation, if the beam identifier information in the first report includes the identifier information of the second beam, the first network device may instruct the second network device to perform interference coordination management. For example, the first network device may send, to the second network device, a first indication carrying an interference coordination parameter, and after receiving the first indication, the second network device adjusts a signal transmit parameter of the second beam of the second cell based on the interference coordination parameter carried in the first indication. Further, if the second network device completes adjusting the signal transmit parameter of the second beam successfully based on the first indication, the second network device returns an adjustment success response to the first network device. If adjusting the signal transmit parameter of the second beam fails, for example, the second network device refuses to adjust the signal transmit parameter of the second beam based on the first indication, the second network device returns an adjustment failure response to the first network device. Optionally, this solution is applicable to a scenario in which the first network device is a primary network device or a control network device, and the second network device is a secondary network device or an auxiliary network device.

The interference coordination parameter may include, for example, one or more of an adjustment direction of the signal transmit parameter, an adjustment step of the signal transmit parameter, and an adjustment result of the signal transmit parameter. When the signal transmit parameter is the signal transmit power, the adjustment direction is increasing or decreasing, the adjustment step is a preset power value, and the adjustment result is a value of an adjusted signal transmit power. When the signal transmit parameter is the signal transmit angle, the adjustment direction is a specified direction, the adjustment step is a preset angle value, and the adjustment result is a value of an adjusted signal transmit angle. When the signal transmit parameter is the signal transmit time, the adjustment direction is advancing or delaying, the adjustment step is preset duration, and the adjustment result is an adjusted signal transmit time. Further, the first indication may further include identifier information of beams interfering with each other (namely, the identifier information of the first beam and the second beam) and/or signal quality of the beams interfering with each other (namely, the signal quality of the first beam and the second beam).

Alternatively, in still another possible implementation, the first network device instructs the second network device to perform interference coordination management. For example, the first network device may send the first information carrying the first report and/or load information of the first network device to the second network device. After receiving the first information, the second network device determines an interference coordination parameter for a signal transmit parameter of the second beam of the second cell based on the first report and/or the load information of the first network device, and adjusts the signal transmit parameter of the second beam of the second cell based on the determined interference coordination parameter. For example, the second network device may reduce a signal transmit power of the second beam of the second cell when determining that the load information of the first network device is relatively low, to reduce a coverage range of the second cell, and offload a part of load of the second network device to the first network device. Further, the second network device may return an adjustment success or failure response to the first network device. Optionally, this solution is applicable to a scenario in which both the first network device and the second network device are primary network devices or control network devices. Herein, for the interference coordination parameter, refer to the related descriptions of the foregoing embodiments, and details are not described herein again.

For example, when the signal transmit parameter is a signal transmit time, an adjustment result of the signal transmit parameter may be an adjustment time of the signal transmit time. If interference is caused because network devices send beams of cells from a same location at the same time, for example, the first network device sends beams of the first cell from a location, and at the same time, the second network device sends beams of the second cell from the location, the first network device and the second network device may perform interference coordination management based on the adjustment time of the signal transmit time in a time division multiplexing (Time Division Multiplexing, TDM) manner. That is, the first network device and the second network device perform time division multiplexing on times of sending the beams, and the first network device and the second network device each occupy a time period to send the beams of the corresponding cell, to reduce interference caused by the second beam of the second cell to a service of the terminal on the first beam of the first cell.

It may be understood that actions performed by the second network device may be considered as actions performed by a chip in the second network device, the second network device is an example of the third communications apparatus, and the third communications apparatus may alternatively be a chip in a network device.

The following further describes, by way of example, the communication method described above.

As shown in FIG. 2a, a first cell includes eight beams, and identifier information is respectively 1-0, 1-1, 1-2, 1-3, 1-4, 1-5, 1-6, and 1-7; a second cell includes eight beams, and identifier information is respectively 2-0, 2-1, 2-2, 2-3, 2-4, 2-5, 2-6, and 2-7. A serving cell of a terminal is the first cell, the second cell is a neighboring cell of the first cell, and the terminal is located in an overlapping coverage area (namely, a shadow area in which the beam 1-2 and the beam 2-6 intersect in FIG. 2a) between the first cell and the second cell. The terminal measures signal quality of the beam of the first cell and signal quality of the beam of the second cell, and if the terminal determines, based on a signal quality measurement result, that signal quality of the beam 1-2 is greater than or equal to a signal quality threshold of the serving cell and that signal quality of the beam 2-6 is greater than or equal to a signal quality threshold of the neighboring cell of the serving cell, or that an absolute value of a difference between signal quality of the beam 1-2 and signal quality of the beam 2-6 is less than or equal to a difference threshold, the terminal determines that a service that is currently on the beam 1-2 of the first cell receives interference from the beam 2-6 of the second cell, and the terminal sends a first report to a first network device. The first report includes identifier information of the first cell and the identifier information of the beam 1-2 of the first cell, and/or identifier information of the second cell and the identifier information of the beam 2-6 of the second cell. The first network device performs interference coordination management between the beam 1-2 and the beam 2-6 based on the first report.

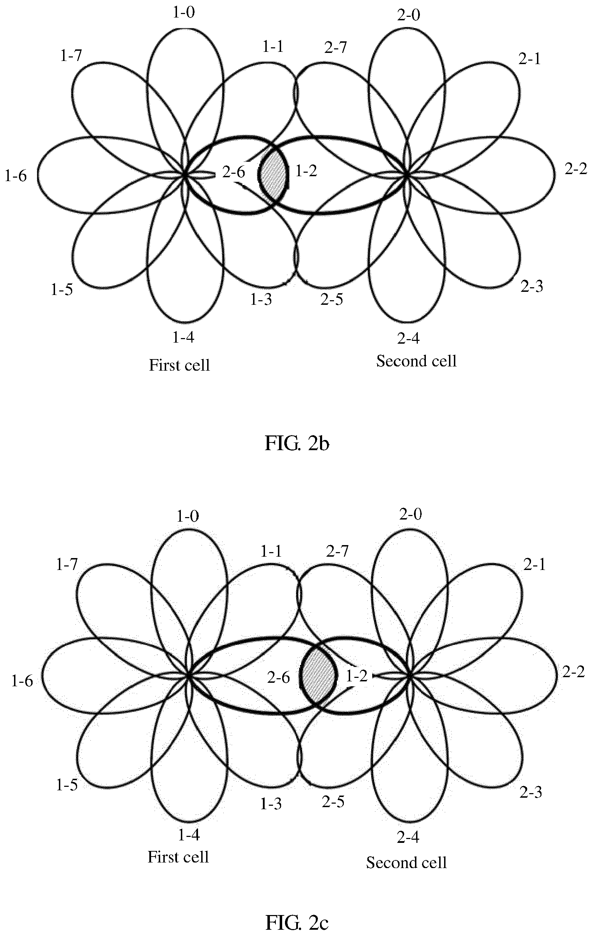

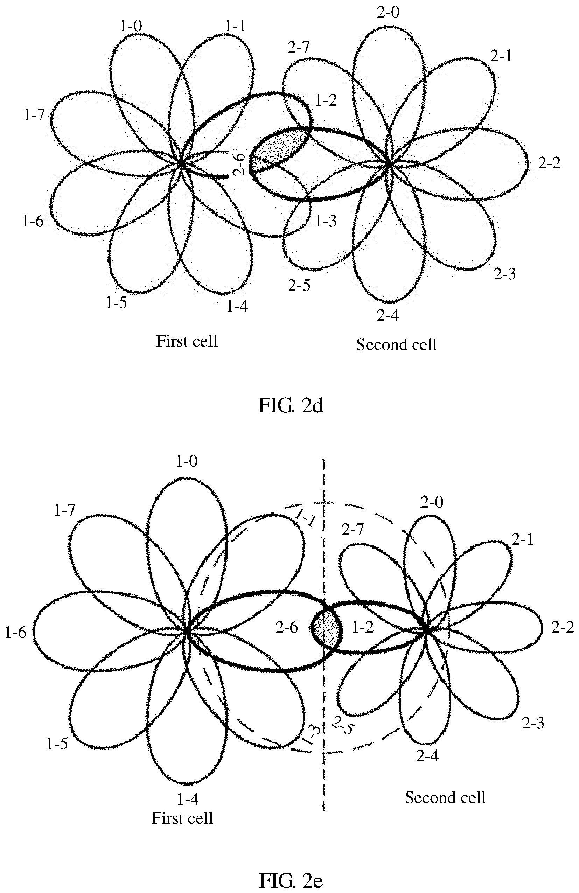

If both the first cell and the second cell belong to the first network device, the first network device may directly adjust a signal transmit parameter of the beam 1-2 and/or a signal transmit parameter of the beam 2-6. For example, the first network device may reduce a signal transmit power of the beam 1-2, to reduce a coverage area of the beam 1-2, and reduce the overlapping coverage area between the beam 1-2 and the beam 2-6, and an interference coordination result is shown in FIG. 2b. Alternatively, the first network device may reduce a signal transmit power of the beam 2-6, to reduce a coverage area of the beam 2-6, and reduce the overlapping coverage area between the beam 1-2 and the beam 2-6, and an interference coordination result is shown in FIG. 2c. Alternatively, the first network device may adjust a signal transmit angle of the beam 1-2, to reduce the overlapping coverage area between the beam 1-2 and the beam 2-6, and an interference coordination result is shown in FIG. 2d. Alternatively, certainly, the first network device may adjust a signal transmit angle of the beam 2-6, to reduce the overlapping coverage area between the beam 1-2 and the beam 2-6. Alternatively, the first network device may adjust a signal transmit time of the beam 1-2 and/or a signal transmit time of the beam 2-6, and may specifically advance or delay the signal transmit time of the beam 1-2 and/or the signal transmit time of the beam 2-6 by preset duration, that is, stagger sending times of the beam 1-2 and the beam 2-6, to reduce the overlapping coverage area between the beam 1-2 and the beam 2-6.

If the first cell and the second cell belong to different network devices, assuming that the first cell belongs to the first network device and the second cell belongs to a second network device, the first network device may interact with the second network device to implement interference coordination management. Specifically, the first network device may adjust a signal transmit parameter of the beam 1-2, and notify the second network device of an adjustment result. Alternatively, the first network device instructs the second network device to adjust a signal transmit parameter of the beam 2-6, and specifically indicates an interference coordination parameter, so that the second network device adjusts the signal transmit parameter of the beam 2-6 based on the interference coordination parameter. Alternatively, the first network device sends the first report and/or load information of the first network device to the second network device, and the second network device determines an interference coordination parameter for a signal transmit parameter of the beam 2-6 based on the first report and/or the load information of the first network device, and adjusts a signal transmit parameter of the beam 2-6 of the second cell based on the determined interference coordination parameter.

In this embodiment of this application, the first network device receives the first report reported by the terminal, obtains related information that is of a beam on which interference exists and that is included in the first report, and may directly perform, based on the first report, interference coordination management on the beam on which interference exists, for example, adjust a signal transmit parameter of the beam on which interference exists. Alternatively, the first network device may interact with the second network device to implement interference coordination management on the beam on which interference exists. For example, the first network device sends indication information to the second network device, where the indication information may indicate an interference coordination parameter, and the second network device directly performs, based on the interference coordination parameter, interference coordination management on the beam on which interference exists, or the indication information may indicate a measurement report and/or load information of the first network device, and the second network device may perform, based on the measurement report and/or the load information of the first network device, interference coordination management on the beam on which interference exists, to adjust the signal transmit parameters of the beams to effectively reduce interference between high-frequency cells.

In addition, for coordination performed by a first base station and a second base station on interference caused to an uplink of a terminal in a high-frequency scenario, the first base station is a base station having a relatively large coverage range to ensure continuous coverage, and a base station similar to the first base station may be referred to as a high-frequency large base station; and the second base station is a base station used as a capacity station and having a relatively small coverage range, and a base station similar to the second base station may be referred to as a high-frequency small base station. As shown in FIG. 2e, the first base station (denoted as the first network device and corresponding to the first cell) and the second base station (denoted as the second network device and corresponding to the second cell) ensure continuous coverage, and there is an overlapping area (shown by a shadow area in which the beam 1-2 and the beam 2-6 intersect in FIG. 2e) between the first cell and the second cell. When the terminal is located in the overlapping area between the first cell and the second cell, if the serving cell of the terminal is the first cell, and the neighboring cell is the second cell, because the serving cell of the terminal belongs to the first network device, an uplink transmit power of the terminal needs to be sufficiently high, so that the first network device can detect the terminal. However, because the beam of the terminal is relatively wide, and the second network device is a high-frequency small base station, when the uplink transmit power of the terminal is relatively high, relatively high interference is caused to an uplink of the second cell. That the beam of the terminal is an omnidirectional antenna is used as an example, a dashed circle in FIG. 2e represents a power needed by the terminal to communicate with the first network device, and it can be learned that relatively high interference is caused to the second cell.

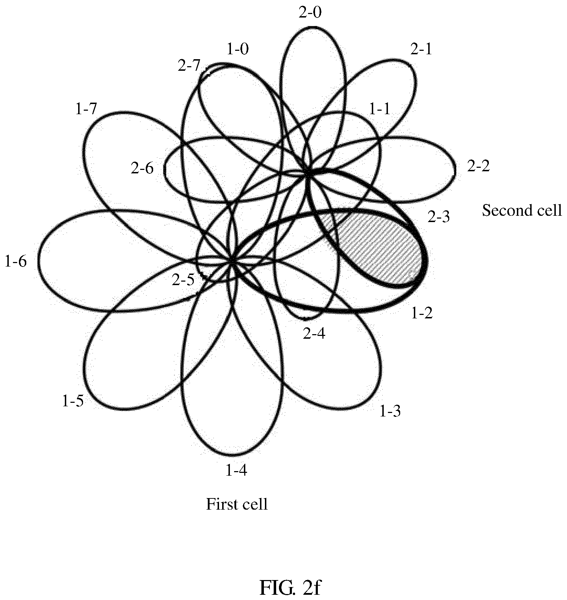

For another example, as shown in FIG. 2f, a coverage area of the second cell is within a coverage area of the first cell. In this case, if the beams of the first cell and the beams of the second cell overlap in a direction (for example, a beam 1-2 and a beam 2-3 in FIG. 2f), when the terminal communicates with the first network device, relatively high interference is caused to the uplink of the second cell.

For scenarios shown in FIG. 2e and FIG. 2f, the second network device may detect an uplink transmit power of the terminal, and instruct, based on the detected uplink transmit power of the terminal, the first network device to adjust the uplink transmit power of the terminal or enable the terminal to be handed over to the second network device. Specifically, the first network device sends a second message to the second network device, where the second message may include identifier information of the terminal and indicate time-frequency resource information for detecting the uplink transmit power of the terminal. The second network device detects the uplink transmit power of the terminal on the time-frequency resource based on the identifier information of the terminal, and may send a second indication to the first network device when the uplink transmit power of the terminal is greater than or equal to a preset power threshold, where the second indication is used to instruct the first network device to perform interference coordination. The second indication may include the identifier information of the terminal and the uplink transmit power of the terminal. Then, the first network device adjusts the uplink transmit power of the terminal based on the identifier information of the terminal, for example, reduces the uplink transmit power of the terminal. Alternatively, the second network device may determine an interference coordination parameter for the uplink transmit power of the terminal, the second indication includes the identifier information of the terminal and the interference coordination parameter, and the interference coordination parameter may specifically include one or more of an adjustment direction of the uplink transmit power, an adjustment step of the uplink transmit power, and an adjustment result of the uplink transmit power. The first network device may adjust the uplink transmit power of the terminal based on the identifier information of the terminal and the interference coordination parameter, to reduce interference caused to the high-frequency small base station in the neighboring cell when the terminal communicates with the high-frequency large base station.

Optionally, the first network device may further adjust a handover threshold of the terminal, so that the terminal is handed over to another network device (for example, the second network device) as far as possible, to reduce interference caused to the high-frequency small base station in the neighboring cell when the terminal communicates with the high-frequency large base station.

It should be noted that FIG. 2e and FIG. 2f use a scenario of networking using high-frequency base stations as an example. The solution of performing coordination on interference caused to the uplink of the terminal is also applicable to a scenario of networking using low-frequency base stations or a scenario of networking using both a high-frequency base station and a low-frequency base station, and this is not limited in this embodiment of this application.

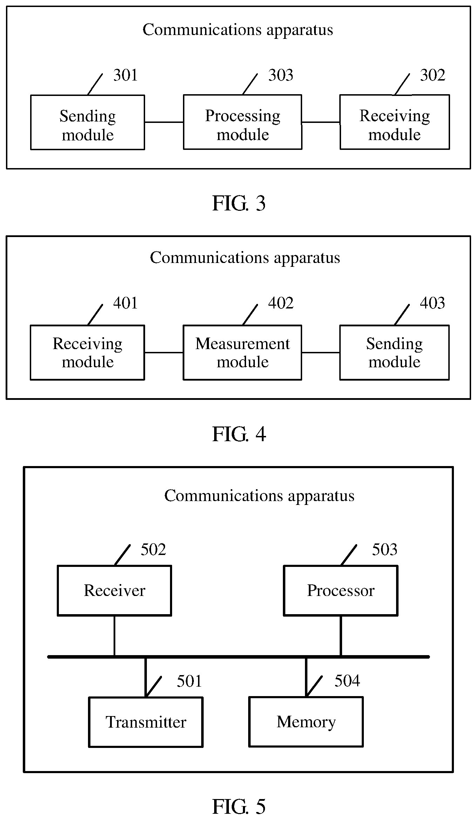

FIG. 3 is a schematic structural diagram of a communications apparatus according to an embodiment of this application. The communications apparatus corresponds to the first communications apparatus described above, and is configured to perform the corresponding method implemented by the first communications apparatus described above. The communications apparatus includes:
a sending module 301, configured to send first information to a terminal, where the first information includes quality threshold information, and the quality threshold information includes a signal quality threshold of a serving cell of the terminal and a signal quality threshold of a neighboring cell of the serving cell, or the quality threshold information includes a threshold of a difference between signal quality of a beam of the serving cell and signal quality of a beam of the neighboring cell; and
a receiving module 302, configured to receive a first report sent by the terminal, where the first report includes cell identifier information and beam identifier information, the beam identifier information includes identifier information of a first beam of a first cell and/or identifier information of a second beam of a second cell, and the cell identifier information includes identifier information of a cell corresponding to a beam identified by the beam identifier information, where signal quality of the first beam is greater than or equal to the signal quality threshold of the serving cell, and signal quality of the second beam is greater than or equal to the signal quality threshold of the neighboring cell; or an absolute value of a difference between signal quality of the first beam and signal quality of the second beam is less than or equal to the difference threshold.

In a possible implementation, the first report further includes signal quality of the beam corresponding to the beam identifier information.

Optionally, the apparatus may further include a processing module 303.

In a possible implementation, the processing module 303 may be configured to: if the beam identifier information includes only the identifier information of the first beam, adjust a signal transmit parameter of the first beam based on the first report, where the signal transmit parameter includes one or more of a signal transmit power, a signal transmit angle, and a signal transmit time.

In a possible implementation, the processing module 303 may be configured to: if the beam identifier information includes only the identifier information of the second beam, adjust a signal transmit parameter of the second beam based on the first report, where the signal transmit parameter includes one or more of a signal transmit power, a signal transmit angle, and a signal transmit time.

In a possible implementation, the processing module 303 may be configured to: if the beam identifier information includes the identifier information of the first beam and the identifier information of the second beam, adjust a signal transmit parameter of the first beam and/or a signal transmit parameter of the second beam based on the first report, where the signal transmit parameter includes one or more of a signal transmit power, a signal transmit angle, and a signal transmit time.

In a possible implementation, the sending module 301 is further configured to: if the beam identifier information includes only the identifier information of the second beam, or the beam identifier information includes the identifier information of the first beam and the identifier information of the second beam, send a first indication to a second network device, where the first indication is used to instruct the second network device to adjust a signal transmit parameter of the second beam, and the signal transmit parameter includes one or more of a signal transmit power, a signal transmit angle, and a signal transmit time.

In a possible implementation, the first indication includes an interference coordination parameter and/or the first report, and the interference coordination parameter includes one or more of an adjustment direction of the signal transmit parameter, an adjustment step of the signal transmit parameter, and an adjustment result of the signal transmit parameter.

It may be understood that functions of the function modules of the communications apparatus in this embodiment may be specifically implemented based on the method in the foregoing method embodiment. For a specific implementation process, refer to the related description in the method embodiment, and details are not described herein again.

In this embodiment of this application, the sending module 301 delivers the first information including the quality threshold information to the terminal, the terminal measures signal quality of the beam of the neighboring cell of the serving cell and signal quality of the beam of the serving cell, and reports, by using the first report, related information of a beam on which interference exists. The receiving module 302 receives the first report, where the related information of the beam includes identifier information of a cell of the beam and identifier information of the beam, and the related information of the beam may further include signal quality of the beam and the like, to determine the beam on which interference exists, and facilitate interference coordination between high-frequency cells.

Further, the processing module 303 may be further configured to perform, based on the first report, interference coordination management on the beam on which interference exists, or the sending module 301 may send indication information to the second network device, where the indication information is used to instruct the second network device to perform, based on an interference coordination parameter, interference coordination management on the beam on which interference exists, to effectively reduce interference between high-frequency cells. It may be understood that the modules of the communications apparatus correspond to corresponding function implementations in the communications apparatus. As described above, the communications apparatus may be a network device such as a base station, or may be a chip in a network device.

FIG. 4 is a schematic structural diagram of another communications apparatus according to an embodiment of this application. The communications apparatus corresponds to the second communications apparatus described above, and is configured to perform the corresponding method implemented by the second communications apparatus described above. The communications apparatus includes:
a receiving module 401, configured to receive first information, where the first information includes quality threshold information, and the quality threshold information includes a signal quality threshold of a serving cell of the terminal and a signal quality threshold of a neighboring cell of the serving cell, or the quality threshold information includes a threshold of a difference between signal quality of a beam of the serving cell and signal quality of a beam of the neighboring cell;
a measurement module 402, configured to: measure signal quality of a beam of a first cell and signal quality of a beam of a second cell, and generate a first report based on the first information, where the first report includes cell identifier information and beam identifier information, the beam identifier information includes identifier information of a first beam of the first cell and/or identifier information of a second beam of the second cell, and the cell identifier information includes identifier information of a cell corresponding to a beam identified by the beam identifier information, where signal quality of the first beam is greater than or equal to the signal quality threshold of the serving cell, and signal quality of the second beam is greater than or equal to the signal quality threshold of the neighboring cell; or an absolute value of a difference between signal quality of the first beam and signal quality of the second beam is less than or equal to the difference threshold; and
a sending module 403, configured to send the first report to a first network device.

In a possible implementation, the first report further includes signal quality of the beam corresponding to the beam identifier information.

In a possible implementation, the first report is used for interference coordination management.

It may be understood that functions of the function modules of the communications apparatus in this embodiment may be specifically implemented based on the method in the foregoing method embodiment. For a specific implementation process, refer to the related description in the method embodiment, and details are not described herein again.

In this embodiment of this application, the receiving module 401 may receive the first information, where the first information includes the quality threshold information, and the quality threshold information includes the signal quality threshold of the serving cell of the terminal and the signal quality threshold of the neighboring cell of the serving cell, or includes the threshold of the difference between the signal quality of the beam beam of the serving cell and the signal quality of the beam of the neighboring cell. The measurement module 402 measures the signal quality of beam of the first cell and the signal quality of the beam of the second cell, and generates the first report based on the first information. The first report includes identifier information of the first cell and the identifier information of the first beam beam of the first cell, and/or identifier information of the second cell and the identifier information of the second beam of the second cell. The signal quality of the first beam is greater than or equal to the signal quality threshold of the serving cell, and the signal quality of the second beam is greater than or equal to the signal quality threshold of the neighboring cell; or the signal quality of the first beam does not greatly differ from the signal quality of the second beam, for example, the absolute value of the difference between the signal quality of the first beam and the signal quality of the second beam is less than or equal to the difference threshold. The sending module 403 sends the first report to the first network device, to determine a beam on which interference exists, and facilitate interference coordination between high-frequency cells. It may be understood that the modules of the communications apparatus correspond to corresponding function implementations in the communications apparatus. As described above, the communications apparatus may be a terminal, or may be a chip in a terminal.

FIG. 5 is a schematic structural diagram of still another communications apparatus according to an embodiment of this application. The communications apparatus corresponds to the first communications apparatus described above, and is configured to perform the corresponding method implemented by the first communications apparatus described above. The communications apparatus includes: a transmitter 501 and a receiver 502.

The transmitter 501 is configured to perform a corresponding method implemented by the sending module 301 described above.

The receiver 502 is configured to perform a corresponding method implemented by the receiving module 302 described above.

Optionally, the transmitter 501 and the receiver 502 may be integrated into a transceiver.

Further, the communications apparatus may further include a processor 503, where the processor 503 is configured to perform a corresponding method implemented by the processing module 303 described above.

Optionally, the communications apparatus may further include a memory 504, where the memory 504 is configured to store an instruction, and the instruction is executed to implement steps of the first communications apparatus in the foregoing method. Further, the memory 504 may further store other data information, and this is not limited in this embodiment of this application.

Optionally, functions of the transmitter 501 and the receiver 502 may be implemented by using a transceiver circuit or a chip dedicated for transceiving. The processor 503 may be implemented by using a dedicated processing chip, a processing circuit, a processor, or a universal chip.

For concepts, explanations, and detailed descriptions used by the communications apparatus and related to the technical solution provided in this embodiment of this application, and other steps, refer to the descriptions of the content in the foregoing method or other embodiments, and details are not described herein again.

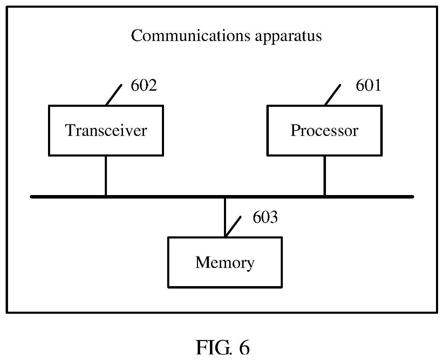

FIG. 6 is a schematic structural diagram of still another communications apparatus according to an embodiment of this application. The communications apparatus corresponds to the second communications apparatus described above, and is configured to perform the corresponding method implemented by the second communications apparatus described above. The communications apparatus includes: a processor 601 and a transceiver 602.

The processor 601 is configured to perform a corresponding method implemented by the measurement module 402 described above.

The transceiver 602 is configured to perform a corresponding method implemented by the receiving module 401 and the sending module 403 described above.

Optionally, the communications apparatus may further include a memory 603, where the memory 603 is configured to store an instruction, and the instruction is executed to implement steps of the second communications apparatus in the foregoing method. Further, the memory 603 may further store other data information, and this is not limited in this embodiment of this application.

Optionally, functions of the transceiver 602 may be implemented by using a transceiver circuit or a chip dedicated for transceiving. The processor 601 may be implemented by using a dedicated processing chip, a processing circuit, a processor, or a universal chip.

For concepts, explanations, and detailed descriptions used by the communications apparatus and related to the technical solution provided in this embodiment of this application, and other steps, refer to the descriptions of the content in the foregoing method or other embodiments, and details are not described herein again.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instruction is loaded and executed on a computer, the procedure or functions according to the embodiments of this application are all or partially generated. The computer may be a general-purpose computer, a dedicated computer, a computer network, or other programmable apparatuses. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (DSL)) or wireless (for example, infrared or microwave) manner. The computer-readable storage medium may be any available medium accessible by a computer, or a data storage device, such as a server or a data center, integrating one or more available media. The available medium may be a magnetic medium (for example, a floppy disk, a hard disk, or a magnetic tape), an optical medium (for example, a DVD), a semiconductor medium (for example, a solid-state drive (Solid State Disk, SSD)), or the like.

## Claims

1. A communication method, comprising:
sending (101) first information to a terminal, wherein the first information comprises quality threshold information, and the quality threshold information comprises a signal quality threshold of a serving cell of the terminal and a signal quality threshold of a neighboring cell of the serving cell, or the quality threshold information comprises a threshold of a difference between signal quality of a beam of the serving cell and signal quality of a beam of the neighboring cell, wherein the a serving cell is a first cell, and the neighboring cell of the serving cell is a second cell, wherein the quality threshold information allows the terminal to determine that there is a beam on which interference exists between the first cell and the second cell; and
receiving (103) a first report used for reporting related information of a beam on which interference exists from the terminal, wherein the first report comprises cell identifier information and beam identifier information, the beam identifier information comprises identifier information of a first beam of the first cell and/or identifier information of a second beam of the second cell, and the cell identifier information comprises identifier information of a cell corresponding to a beam identified by the beam identifier information, wherein signal quality of the first beam is greater than or equal to the signal quality threshold of the serving cell, and signal quality of the second beam is greater than or equal to the signal quality threshold of the neighboring cell; or an absolute value of a difference between signal quality of the first beam and signal quality of the second beam is less than or equal to the difference threshold;
performing (104) interference coordination management based on the first report.

2. The method according to claim 1, wherein
the first report further comprises signal quality of the beam corresponding to the beam identifier information.

3. The method according to claim 1 or 2, wherein the performing (104) interference coordination management based on the first report comprises:
if the beam identifier information comprises only the identifier information of the first beam, adjusting a signal transmit parameter of the first beam based on the first report, wherein the signal transmit parameter comprises one or more of a signal transmit power, a signal transmit angle, and a signal transmit time.

4. The method according to claim 1 or 2, wherein the performing (104) interference coordination management based on the first report comprises:
if the beam identifier information comprises only the identifier information of the second beam, adjusting a signal transmit parameter of the second beam based on the first report, wherein the signal transmit parameter comprises one or more of a signal transmit power, a signal transmit angle, and a signal transmit time.

5. The method according to claim 1 or 2, wherein the performing (104) interference coordination management based on the first report comprises:
if the beam identifier information comprises the identifier information of the first beam and the identifier information of the second beam, adjusting a signal transmit parameter of the first beam and/or a signal transmit parameter of the second beam based on the first report, wherein the signal transmit parameters each comprise one or more of a signal transmit power, a signal transmit angle, and a signal transmit time.

6. The method according to claim 1 or 2, wherein the performing (104) interference coordination management based on the first report comprises:
if the beam identifier information comprises the identifier information of the second beam, the first beam corresponds to a first network device, and the second beam corresponds to a second network device, sending, by the first network device, a first indication to the second network device, wherein the first indication is used to indicate information about a signal transmit parameter that is of the second beam and that is to be adjusted by the second network device, and the signal transmit parameter comprises one or more of a signal transmit power, a signal transmit angle, and a signal transmit time.

7. The method according to claim 6, wherein
the first indication comprises an interference coordination parameter and/or the first report, and the interference coordination parameter comprises one or more of an adjustment direction of the signal transmit parameter, an adjustment step of the signal transmit parameter, and an adjustment result of the signal transmit parameter.

8. A communication method, comprising:
receiving (101) first information, wherein the first information comprises quality threshold information, and the quality threshold information comprises a signal quality threshold of a serving cell of a terminal and a signal quality threshold of a neighboring cell of the serving cell, or the quality threshold information comprises a threshold of a difference between signal quality of a beam of the serving cell and signal quality of a beam of the neighboring cell, wherein the a serving cell is a first cell, and the neighboring cell of the serving cell is a second cell;
measuring (102) signal quality of a beam of a first cell and signal quality of a beam of a second cell and generating a first report based on the first information; wherein the first report is used for reporting related information of a beam on which interference exists;
sending (103) the first report to a first network device, wherein the first report comprises cell identifier information and beam identifier information, the beam identifier information comprises identifier information of a first beam of the first cell and/or identifier information of a second beam of the second cell, and the cell identifier information comprises identifier information of a cell corresponding to a beam identified by the beam identifier information,
wherein the measuring (102) signal quality of a beam of a first cell and signal quality of a beam of a second cell and generating a first report based on the first information comprises:
when the signal quality of the beam of the first cell and the signal quality of the beam of the second cell meet a preset condition, determining that there is a beam on which interference exists between the first cell and the second cell;
wherein the preset condition includes: signal quality of a beam of the first cell is greater than or equal to the signal quality threshold of the serving cell, and signal quality of a beam of the second cell is greater than or equal to the signal quality threshold of the neighboring cell; or the preset condition includes: an absolute value of a difference between signal quality of a beam of the first cell and signal quality of a beam of the second cell is less than or equal to the difference threshold.

9. The method according to claim 8, wherein
the first report further comprises signal quality of the beam corresponding to the beam identifier information.

10. The method according to claim 8 or 9, wherein
the first report is used for interference coordination management.

11. A communications apparatus, wherein
the apparatus is configured to implement the method according to any one of claims 1-7.

12. A communications apparatus, wherein
the apparatus is configured to implement the method according to any one of claims 8-10.

13. A computer readable storage medium, wherein
the storage medium stores an instruction, and when the instruction is run on a computer, the computer is enabled to perform the communication method according to any one of claims 1 to 7.

14. A computer readable storage medium, wherein
the storage medium stores an instruction, and when the instruction is run on a computer, the computer is enabled to perform the communication method according to any one of claims 8 to 10.

15. A communications system, wherein
the system comprises the apparatus according to claim 11 and the apparatus according to claim 12.

## Patentansprüche

1. Kommunikationsverfahren, umfassend:
Senden (101) erster Informationen an ein Endgerät, wobei die ersten Informationen Güteschwelleninformationen umfassen und die Güteschwelleninformationen eine Signalgüteschwelle einer bedienenden Zelle des Endgeräts und eine Signalgüteschwelle einer benachbarten Zelle der bedienenden Zelle umfassen oder die Güteschwelleninformationen eine Schwelle einer Differenz zwischen der Signalgüte eines Strahls der bedienenden Zelle und der Signalgüte eines Strahls der benachbarten Zelle umfassen, wobei die bedienende Zelle eine erste Zelle ist und die benachbarte Zelle der bedienenden Zelle eine zweite Zelle ist, wobei die Güteschwelleninformationen es dem Endgerät ermöglichen zu bestimmen, dass es einen Strahl gibt, auf dem Interferenz zwischen der ersten Zelle und der zweiten Zelle vorhanden ist, und
Empfangen (103) eines ersten Berichts von dem Endgerät, der zum Berichten verwandter Informationen eines Strahls, auf dem Interferenz vorhanden ist, verwendet wird, wobei der erste Bericht Zellkennungsinformationen und Strahlkennungsinformationen umfasst, wobei die Strahlkennungsinformationen Kennungsinformationen eines ersten Strahls der ersten Zelle und/oder Kennungsinformationen eines zweiten Strahls der zweiten Zelle umfassen und die Zellkennungsinformationen Kennungsinformationen einer Zelle umfassen, die einem Strahl entspricht, der durch die Strahlkennungsinformationen identifiziert ist, wobei die Signalgüte des ersten Strahls höher als oder gleich der Signalgüteschwelle der bedienenden Zelle ist und die Signalgüte des zweiten Strahls höher als oder gleich der Signalgüteschwelle der benachbarten Zelle ist, oder ein Absolutwert einer Differenz zwischen der Signalgüte des ersten Strahls und der Signalgüte des zweiten Strahls kleiner als oder gleich der Differenzschwelle ist,
Durchführen (104) von Interferenzkoordinationsmanagement basierend auf dem ersten Bericht.

2. Verfahren nach Anspruch 1, wobei
der erste Bericht ferner eine Signalgüte des Strahls umfasst, der den Strahlkennungsinformationen entspricht.

3. Verfahren nach Anspruch 1 oder 2, wobei das Durchführen (104) von Interferenzkoordinationsmanagement basierend auf dem ersten Bericht umfasst:
wenn die Strahlkennungsinformationen nur die Kennungsinformationen des ersten Strahls umfassen, Justieren eines Signalübertragungsparameters des ersten Strahls basierend auf dem ersten Bericht, wobei der Signalübertragungsparameter eines oder mehrere von einer Signalübertragungsstärke, einem Signalübertragungswinkel und einer Signalübertragungszeit umfasst.

4. Verfahren nach Anspruch 1 oder 2, wobei das Durchführen (104) von Interferenzkoordinationsmanagement basierend auf dem ersten Bericht umfasst:
wenn die Strahlkennungsinformationen nur die Kennungsinformationen des zweiten Strahls umfassen, Justieren eines Signalübertragungsparameters des zweiten Strahls basierend auf dem ersten Bericht, wobei der Signalübertragungsparameter eines oder mehrere von einer Signalübertragungsstärke, einem Signalübertragungswinkel und einer Signalübertragungszeit umfasst.

5. Verfahren nach Anspruch 1 oder 2, wobei das Durchführen (104) von Interferenzkoordinationsmanagement basierend auf dem ersten Bericht umfasst:
wenn die Strahlkennungsinformationen die Kennungsinformationen des ersten Strahls und die Kennungsinformationen des zweiten Strahls umfassen, Justieren eines Signalübertragungsparameters des ersten Strahls und/oder eines Signalübertragungsparameters des zweiten Strahls basierend auf dem ersten Bericht, wobei die Signalübertragungsparameter jeweils eines oder mehrere von einer Signalübertragungsstärke, einem Signalübertragungswinkel und einer Signalübertragungszeit umfassen.

6. Verfahren nach Anspruch 1 oder 2, wobei das Durchführen (104) von Interferenzkoordinationsmanagement basierend auf dem ersten Bericht umfasst:
wenn die Strahlkennungsinformationen die Kennungsinformationen des zweiten Strahls umfassen, der erste Strahl einem ersten Netzwerkgerät entspricht und der zweite Strahl einem zweiten Netzwerkgerät entspricht, Senden einer ersten Angabe durch das erste Netzwerkgerät an das zweite Netzwerkgerät, wobei die erste Angabe verwendet wird, um Informationen über einen Signalübertragungsparameter anzugeben, der von dem zweiten Strahl stammt und der durch das zweite Netzwerkgerät zu justieren ist, und der Signalübertragungsparameter eines oder mehrere von einer Signalübertragungsstärke, einem Signalübertragungswinkel und einer Signalübertragungszeit umfasst.

7. Verfahren nach Anspruch 6, wobei
die erste Angabe einen Interferenzkoordinationsparameter und/oder den ersten Bericht umfasst und der Interferenzkoordinationsparameter eine oder mehrere von einer Justierungsrichtung des Signalübertragungsparameters, einem Justierungsschritt des Signalübertragungsparameters und einem Justierungsergebnis des Signalübertragungsparameters umfasst.

8. Kommunikationsverfahren, umfassend:
Empfangen (101) erster Informationen, wobei die ersten Informationen Güteschwelleninformationen umfassen und die Güteschwelleninformationen eine Signalgüteschwelle einer bedienenden Zelle und eine Signalgüteschwelle einer benachbarten Zelle der bedienenden Zelle umfassen oder die Güteschwelleninformationen eine Schwelle einer Differenz zwischen der Signalgüte eines Strahls der bedienenden Zelle und der Signalgüte eines Strahls der benachbarten Zelle umfassen, wobei die bedienende Zelle eine erste Zelle ist und die benachbarte Zelle der bedienenden Zelle eine zweite Zelle ist,
Messen (102) einer Signalgüte eines Strahls einer ersten Zelle und einer Signalgüte eines Strahls einer zweiten Zelle und Erzeugen eines ersten Berichts basierend auf den ersten Informationen, wobei der erste Bericht zum Berichten verwandter Informationen eines Strahls, auf dem Interferenz vorhanden ist, verwendet wird,
Senden (103) des ersten Berichts an ein erstes Netzwerkgerät, wobei der erste Bericht Zellkennungsinformationen und Strahlkennungsinformationen umfasst, wobei die Strahlkennungsinformationen Kennungsinformationen eines ersten Strahls der ersten Zelle und/oder Kennungsinformationen eines zweiten Strahls der zweiten Zelle umfassen und die Zellkennungsinformationen Kennungsinformationen einer Zelle umfassen, die einem Strahl entspricht, der durch die Strahlkennungsinformationen identifiziert ist,
wobei das Messen (102) einer Signalgüte eines Strahls einer ersten Zelle und einer Signalgüte eines Strahls einer zweiten Zelle und das Erzeugen eines ersten Berichts basierend auf den ersten Informationen umfassen:
wenn die Signalgüte des Strahls der ersten Zelle und die Signalgüte des Strahls der zweiten Zelle eine voreingestellte Bedingung erfüllen, Bestimmen, dass es einen Strahl gibt, auf dem Interferenz zwischen der ersten Zelle und der zweiten Zelle vorhanden ist,
wobei die voreingestellte Bedingung umfasst: die Signalgüte eines Strahls der ersten Zelle ist höher als oder gleich der Signalgüteschwelle der bedienenden Zelle und die Signalgüte eines Strahls der zweiten Zelle ist höher als oder gleich der Signalgüteschwelle der benachbarten Zelle, oder die voreingestellte Bedingung beinhaltet: ein Absolutwert einer Differenz zwischen der Signalgüte eines Strahls der ersten Zelle und der Signalgüte eines Strahls der zweiten Zelle ist kleiner als oder gleich der Differenzschwelle.

9. Verfahren nach Anspruch 8, wobei
der erste Bericht ferner eine Signalgüte des Strahls umfasst, der den Strahlkennungsinformationen entspricht.

10. Verfahren nach Anspruch 8 oder 9, wobei
der erste Bericht für das Interferenzkoordinationsmanagement verwendet wird.

11. Kommunikationsvorrichtung, wobei die Vorrichtung dazu gestaltet ist, das Verfahren nach einem der Ansprüche 1-7 zu implementieren.

12. Kommunikationsvorrichtung, wobei die Vorrichtung dazu gestaltet ist, das Verfahren nach einem der Ansprüche 8-10 zu implementieren.

13. Computerlesbares Speichermedium, wobei das Speichermedium eine Anweisung speichert und wobei, wenn die Anweisung auf einem Computer ausgeführt wird, der Computer in die Lage versetzt wird, das Kommunikationsverfahren nach einem der Ansprüche 1-7 durchzuführen.

14. Computerlesbares Speichermedium, wobei das Speichermedium eine Anweisung speichert und, wenn die Anweisung auf einem Computer ausgeführt wird, der Computer in die Lage versetzt wird, das Kommunikationsverfahren nach einem der Ansprüche 8-10 durchzuführen.

15. Kommunikationssystem, wobei das System die Vorrichtung nach Anspruch 11 und die Vorrichtung nach Anspruch 12 umfasst.

## Revendications

1. Procédé de communication, comprenant les étapes consistant à :
envoyer (101) une première information à un terminal, la première information comprenant une information de seuil de qualité, et l'information de seuil de qualité comprenant un seuil de qualité de signal d'une cellule de desserte du terminal et un seuil de qualité de signal d'une cellule voisine de la cellule de desserte ou bien l'information de seuil de qualité comprenant un seuil d'une différence entre une qualité de signal d'un faisceau de la cellule de desserte et une qualité de signal d'un faisceau de la cellule voisine, la cellule de desserte étant une première cellule et la cellule voisine de la cellule de desserte étant une seconde cellule, l'information de seuil de qualité permettant au terminal de déterminer qu'il y a un faisceau sur lequel il existe un brouillage entre la première cellule et la seconde cellule ; et
recevoir (103), en provenance du terminal, un premier rapport utilisé pour rapporter une information connexe d'un faisceau sur lequel il existe un brouillage, le premier rapport comprenant une information d'identification de cellule et une information d'identification de faisceau, l'information d'identification de faisceau comprenant une information d'identification d'un premier faisceau de la première cellule et/ou une information d'identification d'un second faisceau de la seconde cellule, et l'information d'identification de cellule comprenant une information d'identification d'une cellule correspondant à un faisceau identifié par l'information d'identification de faisceau, une qualité de signal du premier faisceau étant supérieure ou égale au seuil de qualité de signal de la cellule de desserte et une qualité de signal du second faisceau étant supérieure ou égale au seuil de qualité de signal de la cellule voisine ; ou une valeur absolue d'une différence entre une qualité de signal du premier faisceau et une qualité de signal du second faisceau est inférieure ou égale au seuil de différence ;
réaliser (104) une gestion de coordination de brouillage sur la base du premier rapport.

2. Procédé selon la revendication 1, dans lequel :
le premier rapport comprend en outre une qualité de signal du faisceau correspondant à l'information d'identification de faisceau.

3. Procédé selon la revendication 1 ou 2, dans lequel la réalisation (104) d'une gestion de coordination de brouillage sur la base du premier rapport comprend l'étape consistant à :
si l'information d'identification de faisceau comprend uniquement l'information d'identification du premier faisceau, régler un paramètre de transmission de signal du premier faisceau sur la base du premier rapport, le paramètre de transmission de signal comprenant un ou plusieurs paramètres parmi une puissance de transmission de signal, un angle de transmission de signal et un temps de transmission de signal.

4. Procédé selon la revendication 1 ou 2, dans lequel la réalisation (104) d'une gestion de coordination de brouillage sur la base du premier rapport comprend l'étape consistant à :
si l'information d'identification de faisceau comprend uniquement l'information d'identification du second faisceau, régler un paramètre de transmission de signal du second faisceau sur la base du premier rapport, le paramètre de transmission de signal comprenant un ou plusieurs paramètres parmi une puissance de transmission de signal, un angle de transmission de signal et un temps de transmission de signal.

5. Procédé selon la revendication 1 ou 2, dans lequel la réalisation (104) d'une gestion de coordination de brouillage sur la base du premier rapport comprend l'étape consistant à :
si l'information d'identification de faisceau comprend l'information d'identification du premier faisceau et l'information d'identification du second faisceau, régler un paramètre de transmission de signal du premier faisceau et/ou un paramètre de transmission de signal du second faisceau sur la base du premier rapport, les paramètres de transmission de signal comprenant chacun un ou plusieurs paramètres parmi une puissance de transmission de signal, un angle de transmission de signal et un temps de transmission de signal.

6. Procédé selon la revendication 1 ou 2, dans lequel la réalisation (104) d'une gestion de coordination de brouillage sur la base du premier rapport comprend l'étape consistant à :
si l'information d'identification de faisceau comprend l'information d'identification du second faisceau, le premier faisceau correspond à un premier dispositif de réseau et le second faisceau correspond à un second dispositif de réseau, envoyer, par le premier dispositif de réseau, une première indication au second dispositif de réseau, la première indication étant utilisée pour indiquer une information concernant un paramètre de transmission de signal qui est du second faisceau et qui doit être réglé par le second dispositif de réseau, et le paramètre de transmission de signal comprenant un ou plusieurs paramètres parmi une puissance de transmission de signal, un angle de transmission de signal et un temps de transmission de signal.

7. Procédé selon la revendication 6, dans lequel :
la première indication comprend un paramètre de coordination de brouillage et/ou le premier rapport, et le paramètre de coordination de brouillage comprend un ou plusieurs paramètres parmi une direction de réglage du paramètre de transmission de signal, un pas de réglage du paramètre de transmission de signal et un résultat de réglage du paramètre de transmission de signal.

8. Procédé de communication, comprenant les étapes consistant à :
recevoir (101) une première information, la première information comprenant une information de seuil de qualité, et l'information de seuil de qualité comprenant un seuil de qualité de signal d'une cellule de desserte d'un terminal et un seuil de qualité de signal d'une cellule voisine de la cellule de desserte ou bien l'information de seuil de qualité comprenant un seuil d'une différence entre une qualité de signal d'un faisceau de la cellule de desserte et une qualité de signal d'un faisceau de la cellule voisine, la cellule de desserte étant une première cellule et la cellule voisine de la cellule de desserte étant une seconde cellule ;
mesurer (102) une qualité de signal d'un faisceau d'une première cellule et une qualité de signal d'un faisceau d'une seconde cellule et générer un premier rapport sur la base de la première information ; le premier rapport étant utilisé pour rapporter une information connexe d'un faisceau sur lequel il existe un brouillage ;
envoyer (103) le premier rapport à un premier dispositif de réseau, le premier rapport comprenant une information d'identification de cellule et une information d'identification de faisceau, l'information d'identification de faisceau comprenant une information d'identification d'un premier faisceau de la première cellule et/ou une information d'identification d'un second faisceau de la seconde cellule, et l'information d'identification de cellule comprenant une information d'identification d'une cellule correspondant à un faisceau identifié par l'information d'identification de faisceau,
la mesure (102) d'une qualité de signal d'un faisceau d'une première cellule et d'une qualité de signal d'un faisceau d'une seconde cellule et la génération d'un premier rapport sur la base de la première information comprenant l'étape consistant à :
quand la qualité de signal du faisceau de la première cellule et la qualité de signal du faisceau de la seconde cellule satisfont à une condition prédéfinie, déterminer qu'il y a un faisceau sur lequel il existe un brouillage entre la première cellule et la seconde cellule ;
la condition prédéfinie incluant : une qualité de signal d'un faisceau de la première cellule est supérieure ou égale au seuil de qualité de signal de la cellule de desserte et une qualité de signal d'un faisceau de la seconde cellule est supérieure ou égale au seuil de qualité de signal de la cellule voisine ; ou la condition prédéfinie incluant : une valeur absolue d'une différence entre une qualité de signal d'un faisceau de la première cellule et une qualité de signal d'un faisceau de la seconde cellule est inférieure ou égale au seuil de différence.

9. Procédé selon la revendication 8, dans lequel :
le premier rapport comprend en outre une qualité de signal du faisceau correspondant à l'information d'identification de faisceau.

10. Procédé selon la revendication 8 ou 9, dans lequel :
le premier rapport est utilisé pour une gestion de coordination de brouillage.

11. Appareil de communication, l'appareil de communication étant configuré pour mettre en œuvre le procédé selon l'une quelconque des revendications 1 à 7.

12. Appareil de communication, l'appareil de communication étant configuré pour mettre en œuvre le procédé selon l'une quelconque des revendications 8 à 10.

13. Support de stockage lisible par ordinateur, le support de stockage stockant une instruction et, quand l'instruction est exécutée sur un ordinateur, l'ordinateur étant en mesure de réaliser le procédé de communication selon l'une quelconque des revendications 1 à 7.

14. Support de stockage lisible par ordinateur, le support de stockage stockant une instruction et, quand l'instruction est exécutée sur un ordinateur, l'ordinateur étant en mesure de réaliser le procédé de communication selon l'une quelconque des revendications 8 à 10.

15. Système de communication, le système comprenant l'appareil selon la revendication 11 et l'appareil selon la revendication 12.
